# EUROPÄISCHE PATENTSCHRIFT

(11) **EP 1 353 160 B1**
(45) Veröffentlichungstag und Bekanntmachung des Hinweises auf die Patenterteilung: **29.10.2008**
(21) Anmeldenummer: 02008386.1
(22) Anmeldetag: 12.04.2002
(51) Int. Cl.: G01L 7/08

(54) **Drucksensor**
Pressure sensor
Capteur de pression

(43) Veröffentlichungstag der Anmeldung: 15.10.2003
(73) Patentinhaber: GRUNDFOS A/S, DK-8850 Bjerringbro (DK)
(72) Erfinder: Mikkelsen, Steen, 8850 Bjerringbro (DK); Ander sen, Per, 8850 Bjerringbro (DK); Krog, Jens Peter, Torup, 8860 Ulstrup (DK)
(74) Vertreter: Hemmer, Arnd

(56) Entgegenhaltungen:
- EP-A- 0 687 895
- GB-A- 2 308 447
- US-B1- 6 311 561
- PATENT ABSTRACTS OF JAPAN vol. 2002, no. 05, 3. Mai 2002 (2002-05-03) -& JP 2002 005771 A (NIPPON FLOW CELL KK), 9. Januar 2002 (2002-01-09)

## Beschreibung

Die Erfindung betrifft einen Drucksensor.

Aus der europäischen Patentanmeldung EP 0801293 A1 ist ein Druck- oder Differenzdrucksensor bekannt, bei welchem eine Membran mit einem darauf befindlichen Messelement eingesetzt wird. Die Membran ist in einem Träger ausgebildet, welcher in einer zweiteiligen Halterung dichtend eingespannt oder eingeklebt ist. Das Messelement auf der Membran wird über elektrische Leitungen mit weiteren elektronischen Bauelementen verbunden, welche auf einer Platine angeordnet sind, die beabstandet zu dem Träger an einem Teil der Halterung befestigt ist. In den beiden Teilen der Halterung sind jeweils Durchgangslöcher ausgebildet, um die Membran mit Druck zu beaufschlagen. Dazu müssen die beiden Teile der Halterung mit äußeren Anschlusskanälen zu einem Gehäuse dichtend in Kontakt gebracht werden. Hierzu sind zusätzliche Dichtelemente erforderlich. Insgesamt ist der Aufbau des Drucksensors recht aufwändig, und der Einbau des Drucksensors in ein Gehäuse ist aufgrund der notwendigen Anordnung weiterer Dichtelemente kompliziert. Da zusätzliche Dichtelemente zwischen der Halterung und dem Gehäuse zwischengelagert werden müssen, ist es ferner nicht möglich, das Gehäuse einteilig auszubilden.

Ein ähnlicher Drucksensor ist aus dem Dokument EP 0687895 A2 auch bekannt.

Es ist Aufgabe der Erfindung, einen verbesserten Drucksensor zu schaffen, welcher einen vereinfachten Aufbau aufweist und einfacher in ein Gehäuse zu integrieren ist und welcher für korrosive Flüssigkeiten und Gase einsetzbar ist.

Diese Aufgabe wird durch einen Drucksensor mit den im Anspruch 1 angegebenen Merkmalen gelöst. Bevorzugte Ausführungsformen ergeben sich aus den Unteransprüchen.

Der erfindungsgemäße Drucksensor weist eine Membran und mindestens ein auf der Membran angeordnetes Messelement zum Erfassen einer Membranauslenkung auf. Auf diese Weise kann, wenn die Membran fest eingespannt und von einem Druck beaufschlagt wird, aufgrund der Membranauslenkung der wirkende Druck erfasst werden. Zur Aufnahme eines Dichtungselementes ist zumindest ein an einer Oberfläche der Membran angeordnetes Halteelement vorgesehen. Das Halteelement weist ein der Membranoberfläche zugewandtes Durchgangsloch auf, welches einen Querschnitt korrespondierend zur Außenkontur eines aufzunehmenden Dichtungselementes aufweist. Auf diese Weise kann das Dichtungselement durch das Halteelement positioniert und fixiert werden. Ein auf diese Weise an der Membran fixiertes Dichtungselement ermöglicht, die Membran gemeinsam mit dem Halteelement in einer Richtung parallel zur Membranoberfläche in eine Ausnehmung in einem Gehäuse einzuschieben. Die Membran kann somit mit dem Halteelement einfach in eine entsprechende Ausnehmung in dem Gehäuse eingesteckt werden. Dabei kann das Gehäuse einstückig ausgebildet sein, da es während der Montage nicht erforderlich ist, einzelne Dichtungselemente zwischen Gehäuse und Membran bzw. deren Halterung einzulegen. Die Dichtungselemente sind bereits vor dem Einstecken in das Gehäuse durch das Halteelement an der Membran in der gewünschten Position festgelegt.

Vorzugsweise ist an jeder der zwei einander entgegengesetzten Oberflächen der Membran jeweils ein Halteelement angeordnet, mit jeweils einem der Membranoberfläche zugewandten Durchgangsloch, das einen Querschnitt korrespondierend zur Außenkontur eines aufzunehmenden Dichtungselementes aufweist. Durch die Anordnung von zwei Halteelementen ist es möglich, an beiden einander entgegengesetzten Membranoberflächen jeweils ein Dichtungselement in einer gewünschten Position zu fixieren. Die Dichtungselemente dienen dazu, die Membran gegenüber einem Gehäuse, in welches die Membran mit den Halteelementen eingesetzt wird, abzudichten. Auch bei dieser Anordnung ist es möglich, die Membran mit den Halteelementen in einer Richtung parallel zur Membranoberfläche in eine Ausnehmung in dem Gehäuse einzustecken. Dabei ist es nicht erforderlich, das Gehäuse zweigeteilt vorzusehen, da keine Dichtungselemente während der Montage zwischen Membran bzw. deren Halterung und Gehäuse einzulegen sind. Die Dichtungselemente sind bereits vor der Montage in den entsprechenden Durchgangslöchern der Halteelemente angeordnet, so dass sie an vorbestimmter Position zwischen Membran und Gehäuse zu liegen kommen.

Die Halteelemente haben im Bereich des Durchgangslochs zweckmäßigerweise eine Stärke, welche geringer als die Dicke eines einzusetzenden Dichtungselementes ist. Das Dichtungselement kann somit zu beiden Seiten des Halteelementes über dessen Oberflächen überstehen. Auf diese Weise kann sichergestellt werden, dass das Dichtungselement mit einer Seite an der Membranoberfläche und mit der anderen Seite mit einer Gehäusewandung eines Gehäuses, in welches die Membran eingesetzt wird, zur Anlage kommen kann. Dabei wird es zwischen der Membranoberfläche und dem Gehäuse elastisch gestaucht, so dass es sowohl an der Membranoberfläche als auch an dem Gehäuse flächig und vollständig dichtend zur Anlage kommt.

Vorzugsweise ist das Dichtungselement ein Dichtungsring und insbesondere ein O-Ring. Das Durchgangsloch weist in diesem Fall einen Durchmesser auf, welcher dem Außendurchmesser des O-Ringes entspricht, so dass der O-Ring in dem Durchgangsloch formschlüssig fixiert werden kann. Die Dicke des O-Ringes ist vorzugsweise größer als die Länge des Durchgangsloches, so dass der O-Ring an beiden Seiten bzw. Oberflächen des Halteelementes überstehen kann, um an der Membranoberfläche und einer Gehäusewandung dichtend anliegen zu können.

In einer bevorzugten Ausführungsform ist das Dichtungselement fest mit dem Halteelement verbunden und insbesondere einstückig mit diesem ausgebildet. Beispielsweise kann das Dichtungselement aus einem Elastomermaterial ausgebildet sein, welches das Halteelement im Bereich des Durchgangsloches formschlüssig umgibt. Das Halteelement kann mit dem Elastomermaterial im Bereich des Durchgangsloches umspritzt sein. Insbesondere wenn Halteelement und Dichtungselement beide aus Kunststoff ausgebildet sind, ist es möglich, beide Elemente miteinander zu verspritzen, so dass ein einstückiges Bauteil entsteht. Dabei ist das Dichtungselement vorzugsweise aus einem anderen Material als das Halteelement ausgebildet. Um ausreichende Dichtungseigenschaften zu gewährleisten, ist für das Dichtungselement ein Elastomermaterial bevorzugt, während für das Halteelement ein steiferes und formstabileres Material bevorzugt ist.

Vorzugsweise sind die beiden Halteelemente über zumindest eine Rastverbindung miteinander verbunden. Dies ermöglicht eine sehr einfache Montage, da keine zusätzlichen Verbindungselemente oder Klebstoffe erforderlich sind. Derartige Rastverbindungen können insbesondere in aus Kunststoff gefertigten Halteelementen sehr leicht als Rastnasen oder Rasthaken ausgebildet werden, welche an dem jeweils anderen Halteelement in eine korrespondierende Öffnung eingreifen.

Weiter bevorzugt sind die beiden Halteelemente einstückig ausgebildet und über ein Scharnier miteinander verbunden. Ein solches Scharnier ist insbesondere ein Filmscharnier, d. h. eine definierte Schwachstelle im Material, um welche die beiden Halteelemente gelenkig gegeneinander bewegt werden können. So können die Halteelemente gemeinsam als flacher Streifen beispielsweise im Spritzguss aus Kunststoff hergestellt werden. Dabei wird einstückig mit den beiden Halteelementen ein diese verbindendes Filmscharnier gegossen. Bei der Montage können die beiden Halteelemente dann um das Filmscharnier aufeinander zugeklappt werden. Dabei können die beiden Halteelemente bevorzugt über entsprechende Rastelemente miteinander verrasten. Die Membran ist dann sicher zwischen den beiden Halteelementen angeordnet.

Weiter bevorzugt ist in zumindest einem Halteelement an einer Oberfläche ein das Durchgangsloch umgebender Absatz zur Aufnahme der Membran ausgebildet. Bei der Montage liegt die Membran vollständig in diesem Absatz. Das ermöglicht, dass die umgebenden Bereiche der beiden Halteelemente miteinander zur Anlage kommen können, da die Membran in der durch den Absatz gebildeten Vertiefung gelegen ist.

In einer besonders bevorzugten Ausführungsform wird zumindest ein Halteelement von einer Platine gebildet. Auf dieser Platine können weitere elektronische Bauelemente beispielsweise zur Übertragung, Auswertung und/oder Aufbereitung eines von dem Messelement erzeugten Messsignales angeordnet sein. Die Platine hat eine Doppelfunktion, zum einen trägt sie die elektronischen Bauelemente und zum anderen dient sie gleichzeitig als Halteelement für ein Dichtungselement. Auf diese Weise wird die Zahl der erforderlichen Bauteile reduziert.

Die Membran ist vorzugsweise mit auf der Platine ausgebildeten Leiterbahnen über im Umfangsbereich des Durchgangsloches angeordnete Kontaktstellen elektrisch verbunden. Bei dieser Anordnung kann die Membran mit entsprechenden Kontaktstellen direkt auf die Platine aufgesetzt werden, so dass keinerlei Leitungen zum elektrischen Anschluss der Membran an der Platine erforderlich sind. Zur elektrischen Verbindung kommen Kontaktstellen an der Membran direkt über Kontaktstellen auf der Platine zu liegen. Die Verbindung der Kontaktstellen miteinander erfolgt in bekannter Weise beispielsweise durch Bonden oder Löten. Gemäß einer bevorzugten Ausführungsform kann die Membran auch auf der Platine verklebt werden. Hierbei wird vorzugsweise ein Klebstoff verwendet, welcher beim Aushärten schrumpft. Wenn ein solcher Klebstoff im Bereich der Kontaktstellen eingesetzt wird, bewirkt die Schrumpfung des Klebstoffes, dass beim Aushärten des Klebstoffes die Kontaktstellen an der Membran und an der Platine einander angenähert werden, so dass sie miteinander in Kontakt treten. Gleichzeitig bildet der umgebende Klebstoff eine Schutzschicht, welche den gebildeten Kontakt vor Umwelteinflüssen schützt. Alternativ oder zusätzlich können die Membran und die gesamte Platine mit den darauf angeordneten elektrischen bzw. elektronischen Bauelementen mit einer Oberflächenversiegelung versehen werden.

Weiter bevorzugt sind zwischen den Kontaktstellen zwischen Membran und Platine vorzugsweise sich parallel zur Membranoberfläche erstreckende Spalte ausgebildet, welche sich von dem Durchgangsloch zum Außenumfang der Membran erstrecken. Diese Spalte verbinden zwischen den einzelnen Kontaktstellen das Innere des Durchgangsloches mit der Atmosphäre am Außenumfang der Membran. Diese Spalte können dadurch erzeugt werden, dass die Kontaktstellen eine gewisse Bauhöhe haben, so dass die Membran beabstandet zu der Oberfläche des Halteelementes bzw. der Platine angeordnet ist. So entstehen zwischen den einzelnen Kontaktstellen Freiräume, welche die durchgängigen Spalte bilden. Die Spalte dienen zur Entlüftung des Raumes zwischen Dichtelement und Durchgangsloch. Dies hat den Vorteil, dass, falls das Dichtelement nicht vollständig diffusionsdicht sein sollte und Fluid, insbesondere Feuchtigkeit, an die Rückseite des Dichtungselementes gelangt, diese durch die Spalte zur Atmosphäre hin austreten kann. Es wird somit verhindert, dass sich Feuchtigkeit im Inneren des Drucksensors an den dem Fluiddurchgang abgewandten Rückseiten der Dichtungselemente sammeln kann. Das Dichtungselement wird über die Spalte hinterlüftet, so dass eventuell durch das Dichtungselement hindurchtretende Feuchtigkeit nach außen hin austreten kann.

Weiter bevorzugt ist ein Sensorgehäuse vorgesehen, in welches die Membran mit dem Halteelement in einer Richtung parallel zur Membranoberfläche derart eingesetzt ist, dass ein in das Durchgangsloch des Halteelementes eingesetztes Dichtungselement zwischen einer Membranoberfläche und dem Sensorgehäuse zur Anlage kommt. Ein Sensor mit einem solchen Sensorgehäuse ist sehr kostengünstig herzustellen und leicht zu montieren. In dem Sensorgehäuse muss lediglich eine Ausnehmung bzw. ein Loch vorgesehen sein, in welches das Halteelement mit der Membran eingesteckt wird. Ein solches Sensorgehäuse kann einstückig ausgebildet sein, da es nicht erforderlich ist, Gehäuseteile normal zur Membranoberfläche zusammenzusetzen, um dazwischenliegende Dichtungselemente zu fixieren. Dadurch, dass die Dichtungselemente zuvor in den Halteelementen angeordnet und fixiert werden können, kann die Einheit bestehend aus Halteelementen, Membran und Dichtungselementen einfach in das Sensorgehäuse in einer Richtung parallel zur Membranoberfläche eingesteckt werden.

In dem Sensorgehäuse sind bevorzugt zwei Anschlusslöcher angeordnet, welche jeweils gegenüberliegend zu einem der Durchgangslöcher in den Halteelementen münden, wobei in die Durchgangslöcher eingesetzte Dichtungselemente am Umfang der Mündung der Anschlusslöcher an dem Sensorgehäuse zur Anlage kommen. Die Anschlusslöcher in dem Sensorgehäuse dienen dazu, die Membran mit einem zu messenden Fluidstrom bzw. einem Fluiddruck zu beaufschlagen. Beispielsweise ist es möglich, den Drucksensor als Differenzdrucksensor auszubilden, wobei von der Membran ein Druckunterschied zwischen den beiden Anschlusslöchern erfasst wird. Alternativ ist es möglich, ein Anschlussloch mit einem Fluid zu beaufschlagen, dessen Druck bestimmt werden soll, und das zweite, bezüglich der Membran entgegengesetzte Anschlussloch mit der Atmosphäre zu verbinden. Auf diese Weise kann ein Fluiddruck gegenüber dem Atmosphärendruck bestimmt werden. Ferner kann ein solches Sensorgehäuse mit den beiden sich nach außen öffnenden Anschlusslöchern in eine Strömung eingesetzt werden, um dort Druckdifferenzen zu erfassen.

Vorzugsweise ist zumindest der fluidberührte Teil des Sensorgehäuses einstückig ausgebildet. Dabei ist der fluidberührte Teil des Sensorgehäuses derjenige Teil, in dem die Membran mit den Halteelementen angeordnet ist, d. h. derjenige Teil, in den die Anschlusslöcher zur Druckbeaufschlagung der Membran ausgebildet sind. Es ist vorteilhaft, besonders diesen Teil, durch welchen ein Fluid der Membran zugeführt wird, einstückig auszubilden, da so weitere Dichtungen zum Abdichten eines mehrteiligen Sensorgehäuses überflüssig werden. Weiter bevorzugt ist das gesamte Sensorgehäuse einstückig ausgebildet, was eine kostengünstige Fertigung des Sensorgehäuses ermöglicht.

Nachfolgend wird die Erfindung beispielhaft anhand der beigefügten Figuren beschrieben. In diesen zeigt:
Fig. 1 eine Schnittansicht zweier Halteelemente mit eingesetzter Membran,
Fig. 2 eine Schnittansicht eines Sensorgehäuses,
Fig. 3 schematisch die Montage des erfindungsgemäßen Sensors,
Fig. 4 eine Schnittansicht eines Halteelementes mit aufgesetzter Membran,
Fig. 5 eine Draufsicht auf die Anordnung gemäß Fig. 4,
Fig.6 eine Schnittansicht einer bevorzugten Ausführungsform des erfindungsgemäßen Sensors,
Fig. 7 eine Schnittansicht einer weiteren Ausführungsform,
Fig. 8 eine Schnittansicht einer dritten Ausführungsform und
Fig. 9 eine Schnittansicht einer vierten Ausführungsform.

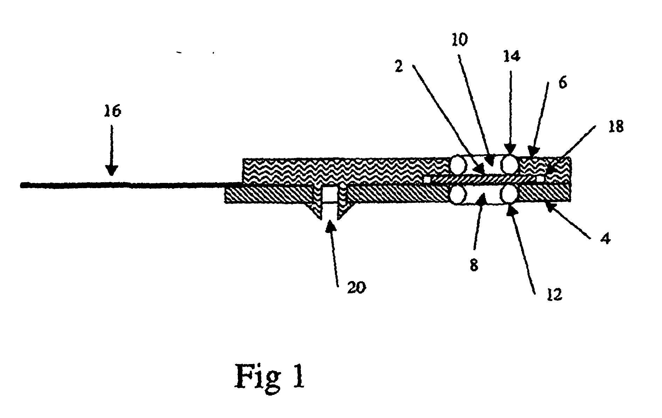

Fig. 1 zeigt eine Schnittansicht eines Teils des erfindungsgemäßen Drucksensors. Der Drucksensor weist eine Membran 2 auf, auf welcher zumindest ein Messelement zur Erfassung eines Druckes ausgebildet ist. Zur Druckerfassung ist die Membran 2 so ausgebildet, wie in der europäischen Patentanmeldung mit dem Aktenzeichen 97 105 396.2 beschrieben ist. Die Druckerfassung erfolgt über die Auslenkung der Membran 2, welche über die an der Membran 2 angeordneten Messelemente erfasst wird. Die Membran 2 ist zwischen zwei Halteelementen 4 und 6 angeordnet. In den beiden Halteelementen 4 und 6 sind zwei miteinander fluchtende Durchgangslöcher 8 und 10 ausgebildet. Die Durchgangslöcher 8 und 10 dienen zur Fixierung zweier Dichtungsringe in Form von O-Ringen 12 und 14. Das Halteelement 4 ist als Platine ausgebildet, auf welcher weitere elektronische bzw. elektrische Bauelemente oder Anschlüsse angeordnet sind, um die von den auf der Membran 2 angeordneten Messelementen erzeugten Signale weiterzuleiten und/oder zu verarbeiten. Zur Signalübertragung ist die Membran 2 mit entsprechenden Kontaktstellen auf dem Halteelement 4 verbunden, wie später beschrieben werden wird. Ausgehend von dem Halteelement 4 bzw. der Platine 4 erstrecken sich Anschlussleitungen 16, welche die Messsignale nach außen weiterleiten. In dem Halteelement 6 ist an der dem Halteelement 4 zugewandten Seite, das Durchgangsloch 10 umgebend, ein Absatz bzw. eine Vertiefung 18 ausgebildet, in der die Membran 2 aufgenommen ist. D. h. die Vertiefung weist in einer Richtung normal zur Oberfläche des Halteelementes 6 eine Tiefe auf, welche im Wesentlichen zumindest der Dicke der Membran 2 entspricht. Dies ermöglicht, die Halteelemente 4 und 6 flach und bündig aufeinander anzuordnen, wobei die Membran 2 vollständig in der Ausnehmung 18 aufgenommen wird. Die Halteelemente 4 und 6 sind über eine Rastverbindung 20 fest miteinander verbunden.

Die Halteelemente 4 und 6 mit den Durchgangslöchern 10 und 12 dienen insbesondere zur Führung bzw. Positionierung der Dichtungselemente 12 und 14. Die Dichtungselemente 12 und 14 sind so in den Durchgangslöchern 8 und 10 angeordnet, dass sie mit entgegengesetzten Oberflächen der Membran 2 in Kontakt kommen. Zusätzlich weisen die Dichtungselemente 12 und 14 jeweils eine Dicke auf, welche größer als die Dicke des zugehörigen Halteelementes 4, 6 ist, so dass die Dichtungselemente 12, 14 über die äußeren Oberflächen der Halteelemente 4 und 6 vorstehen. Dies ermöglicht, dass die Dichtungselemente 12 und 14 direkt mit Wandungen eines Gehäuses, in welches die in Fig.1 gezeigte Baugruppe eingesetzt wird, in Kontakt kommen können. Somit kann eine direkte Abdichtung der Membran an dem Gehäuse erfolgen, ohne dass zusätzliche Dichtungselemente zwischen den Halteelementen 4 und 6 und angrenzenden Gehäuseteilen eingefügt werden müssen.

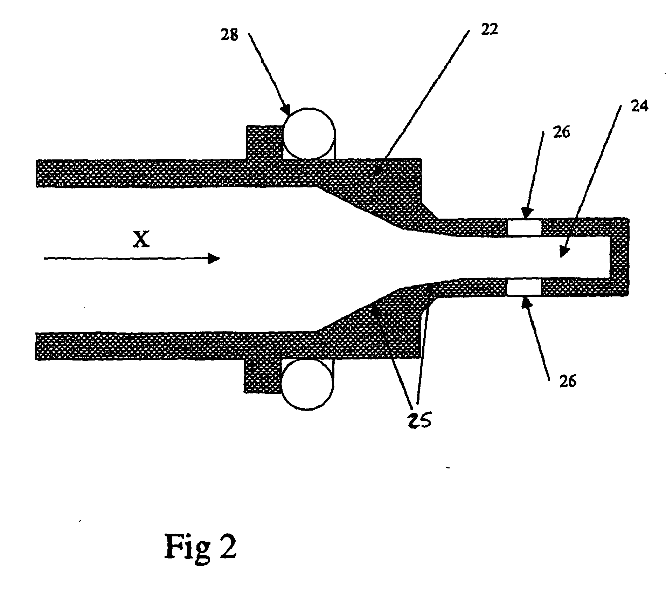

Fig. 2 zeigt die Schnittansicht eines Sensorgehäuses 22, in welches die Baugruppe gemäß Fig. 1 eingesetzt wird. Das Sensorgehäuse 22 weist eine Öffnung 24 auf, in welche die Baugruppe gemäß Fig. 1, bestehend aus den Halteelementen 4 und 6 der zwischengelagerten Membran 2, und den Dichtungselementen 12, 14, in einer Richtung parallel zur Oberfläche der Membran 2 eingesteckt wird. Seitlich sind in der Öffnung 24 Anschlusslöcher 26 ausgebildet, welche sich im Wesentlichen normal zur Längsachse der Öffnung 24 bzw. zur Einschiebrichtung X der Baugruppe gemäß Fig. 1 erstrecken. Beim Einsetzen der gemäß Fig. 1 vorgefertigten Baugruppe kommen die in die Halteelemente 4 und 6 eingesetzten Dichtungsringe 12 und 14 an den Oberflächen der Öffnung 24 im Umfangsbereich der Anschlusslöcher 26 zur Anlage. Auf diese Weise wird die Membran 2 direkt gegenüber dem Gehäuse 22 abgedichtet, ohne dass weitere zu dichtende Schnittstellen zwischen dem Gehäuse 22 und den Halteelementen 4 und 6 entstehen. Die Anschlusslöcher 26 werden mit entsprechenden Anschlussleitungen oder mit der Umgebung verbunden, um die Membran 2 mit gewünschten Drücken zu beaufschlagen, welche erfasst werden sollen. Außen an dem Gehäuse 22 ist ein weiterer Dichtring 28 angeordnet, um das Gehäuse 22 abzudichten, wenn es in einer Anlage bzw. Vorrichtung, in welcher ein Druck bestimmt werden soll, eingesetzt wird.

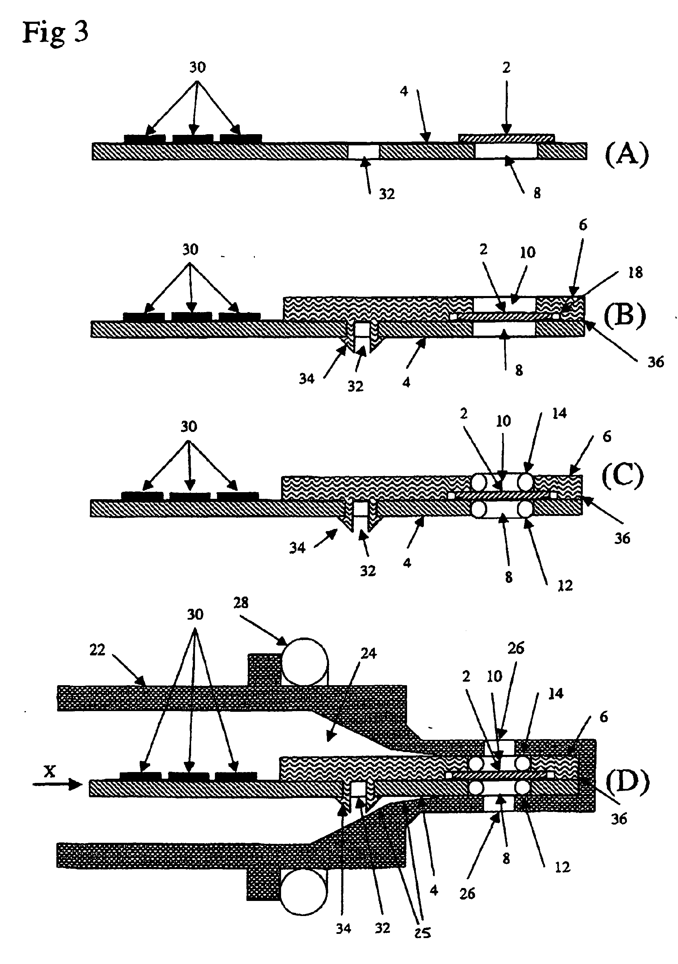

Fig. 3 zeigt schrittweise den Zusammenbau des erfindungsgemäßen Drucksensors. Im Schritt (A) ist eine Platine 4 gezeigt, welche gleichzeitig als erstes Halteelement fungiert. Auf der Platine 4 sind elektronische Bauelemente 30 zur Weiterleitung und/oder Weiterverarbeitung eines Messsignals in bekannter Weise angeordnet. Ferner ist in der Platine 4 ein Durchgangsloch 8 ausgebildet. Über dem Durchgangsloch 8 wird die Membran 2 auf die Platine aufgesetzt. Das Durchgangsloch 8 dient später dazu, die Membran 2 mit Druck zu beaufschlagen. Die an der Membran 2 angeordneten Messelemente (hier nicht näher gezeigt) werden elektrisch mit auf der Platine 4 ausgebildeten Leiterbahnen verbunden. Dies erfolgt dadurch, dass auf der Membran 2 angeordnete Leiterbahnen bzw. Kontakte mit entsprechenden Kontaktstellen an der Oberfläche der Platine 4 in Kontakt kommen. Ferner ist in der Platine 4 ein weiteres Durchgangsloch 32 vorgesehen, um ein Rastelement zur Verbindung der Platine 4 mit einem zweiten Halteelement 6 aufnehmen zu können.

Die Darstellung (B) zeigt den zweiten Schritt des Zusammenbaus des erfindungsgemäßen Sensors. Auf die Platine 4 mit der auf dieser angeordneten Membran 2 wird das Halteelement 6 aufgesetzt. Dabei kommt das Halteelement 6 flach auf der Platine 4 bzw. dem ersten Halteelement 4 zu liegen. Die Membran 2 wird dabei in einer Ausnehmung 18 an dem Halteelement 6 aufgenommen, so dass die Halteelemente 4 und 6 mit ihren Oberflächen bündig aneinander anliegen können. Das in dem zweiten Halteelement 6 ausgebildete Durchgangsloch 10 kommt im Wesentlichen fluchtend über dem Durchgangsloch 8 in der Platine 4 zu liegen. So kann später die Membran 2 über die beiden Durchgangslöcher 8 und 10 von beiden Seiten mit Druck beaufschlagt werden, um einen Differenzdruck zwischen beiden Seiten zu bestimmen. Das Halteelement 6 weist einen der Platine 4 zugewandten Rastvorsprung 34 auf, welcher in das Durchgangsloch 32 in der Platine 4 eingreift und so das Halteelement 6 mit der Platine 4 verrastet. Zusätzlich alternativ können die Halteelemente 4 und 6 beispielsweise miteinander verklebt oder vernietet werden. In einer bevorzugten Ausführungsform werden das Halteelement 6 und die Platine 4 einstückig, vorzugsweise aus Kunststoff, gefertigt. Dazu kann an der Seitenkante 36 zwischen der Platine 4 und dem Halteelement 6 ein Filmscharnier ausgebildet werden, welches die Platine 4 mit dem Halteelement 6 verbindet. Bei der Herstellung werden dann das Halteelement 6 und die Platine 4 als einstückiger Streifen gespritzt bzw. gegossen. Zur Montage wird dann das Halteelement 6 um das Scharnier an der Seitenkante 36 geklappt, so dass es, wie in Fig. 3 (B) gezeigt, auf der Platine 4 zu liegen kommt und über den Rastvorsprung 34 mit der Platine 4 verrastet.

In Schritt (C) werden bei der Anordnung gemäß Fig. 3 (D) Dichtungsringe 12 und 14 in die Durchgangslöcher 8 und 10 in der Platine 4 und dem Halteelement 6 von außen eingelegt. Die Durchgangslöcher 8 und 10 sind in ihrer Dimension mit den einzusetzenden Dichtungsringen 12 und 14 vorzugsweise so aufeinander abgestimmt, dass die Dichtungsringe 12, 14 jeweils einen Außenumfang bzw. -durchmesser aufweisen, welcher mit dem Innenquerschnitt des zugehörigen Durchgangsloches korrespondiert. So können die Dichtungsringe 12 und 14 an der Membran 2 in den Richtungen parallel zu den Membranoberflächen positioniert und fixiert werden. Die Dichtungsringe 12 und 14 weisen jeweils eine Dicke auf, welche größer als die Dicke der zugehörigen Platine 4 bzw. des zugehörigen Halteelementes 6 im Bereich des Durchgangsloches 8 bzw. des Durchgangsloches 10 ist. Auf diese Weise wird erreicht, dass der Dichtungsring 14 über die äußere Oberfläche des Halteelementes 6 vorsteht und dass der Dichtungsring 12 über die äußere Oberfläche der Platine 4 nach außen vorsteht.

Fig. 3 (D) zeigt den Zustand, in dem die vormontierte Baugruppe gemäß Fig. 3 (C) in ein Sensorgehäuse gemäß Fig. 2 eingeschoben bzw. eingesetzt ist. Das Gehäuse 22 kann einstückig ausgebildet sein und weist eine Öffnung 24 auf. In diese Öffnung 24 wird in Richtung des Pfeils X, d. h. in einer Richtung parallel zur Oberfläche der Membran 2, die Baugruppe gemäß Fig. 3 (C), bestehend aus den beiden Halteelementen 4 und 6, der Membran 2 sowie den eingesetzten Dichtungselementen 12 und 14, in die Öffnung 24 eingeschoben. Vorzugsweise ist eine Fase 25 an der Öffnung 24 ausgebildet, um eine Beschädigung der Dichtungselemente 12, 14 zu vermeiden. Dabei kommen die Bereiche der Dichtungselemente 12 und 14, welche über die Oberflächen der Platine 4 und des Halteelementes 6 nach außen vorstehen, mit den Innenwandungen der Öffnung 24 dichtend zur Anlage. Auf diese Weise wird die Membran 2 gegen die Oberflächen im Inneren der Öffnung 24 abgedichtet. Die Platine 4 mit dem Halteelement 6 wird soweit in die Öffnung 24 eingeschoben, dass die Durchgangslöcher 8 und 10 fluchtend zu den Anschlusslöchern 26 in dem Gehäuse 22 angeordnet sind. Dabei kommen die Dichtungselemente 12 und 14 im Umfangsbereich der Anschlusslöcher 26 an der Innenwandung der Öffnung 24 zur Anlage. Somit wird ein gedichteter Durchgang von den Anschlusslöchern 26 zu den zwei einander entgegengesetzten Membranoberflächen der Membran 2 geschaffen. Auf diese Weise kann die Membran 2 von zwei Seiten über die Anschlusslöcher 26 mit Druck beaufschlagt werden, um eine Druckdifferenz zwischen beiden Seiten aufgrund der auftretenden Auslenkung der Membran zu bestimmen. Der auf diese Weise montierte Sensor kann in ein Gerät eingesetzt werden, in dem ein Druck zu bestimmen ist. Dazu weist das Gehäuse 22 an seinem Außenumfang ein weiteres Dichtungselement 28 auf, welches den Sensor in einer entsprechenden Öffnung bzw. Aufnahme des Gerätes abdichtet.

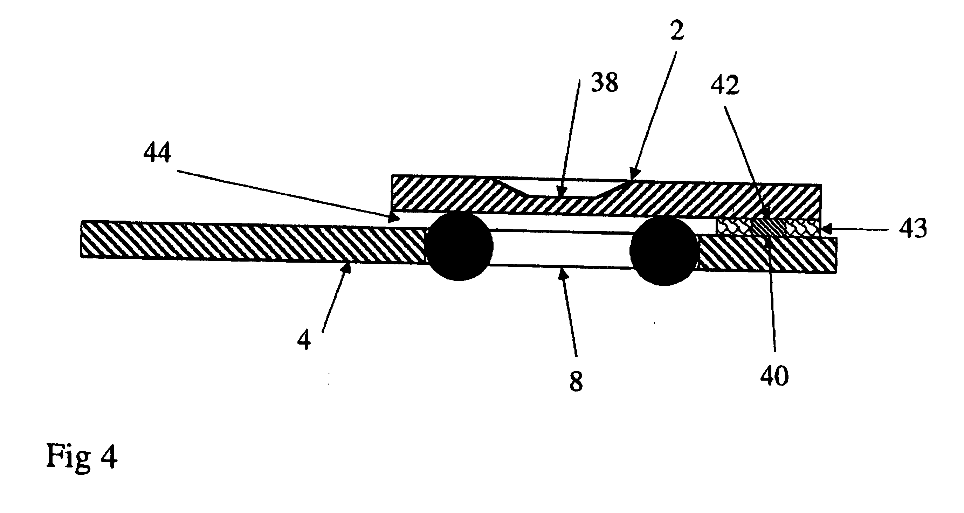

Fig. 4 zeigt eine schematische Schnittansicht des Endbereichs der Platine 4 mit der aufgesetzten Membran 2. Die Membran 2 weist, wie in der europäischen Patentanmeldung EP 97 105 396.2 beschrieben, in ihrer Mitte einen verjüngten Bereich 38 auf, welcher die eigentliche Membran bildet, welche zur Druckbestimmung ausgelenkt wird. Der Umfangsbereich des verdünnten bzw. verjüngten Bereiches 38 fungiert als Träger. Die Membran 2 wird über dem Durchgangsloch 8 in der Platine 4 so angeordnet, dass der verjüngte Bereich 38 möglichst zentrisch zu dem Durchgangsloch 8 angeordnet ist. Die elektrischen bzw. elektronischen Bauelemente zur Bestimmung der Auslenkung der Membran 2 bzw. des verjüngten Bereiches 38 der Membran 2, die an der Membran 2 angeordnet sind, werden mit der Platine 4 über Kontaktstellen 40 und 42 elektrisch verbunden. An der Membran 2 führen entsprechende Leiterbahnen von den Messelementen zu Kontaktstellen 40, welche der Platine 4 zugewandt sind. Auf der Oberfläche der Platine 4 sind Kontaktstellen 42 ausgebildet, welche mit den Kontaktstellen 40 an der Membran 2 in Kontakt treten. Die Kontaktstellen 42 stehen über auf der Platine 4 ausgebildete Leiterbahnen in Verbindung mit weiteren elektronischen Bauelementen 30 auf der Platine 4 und/oder Anschlussleitungen 16.

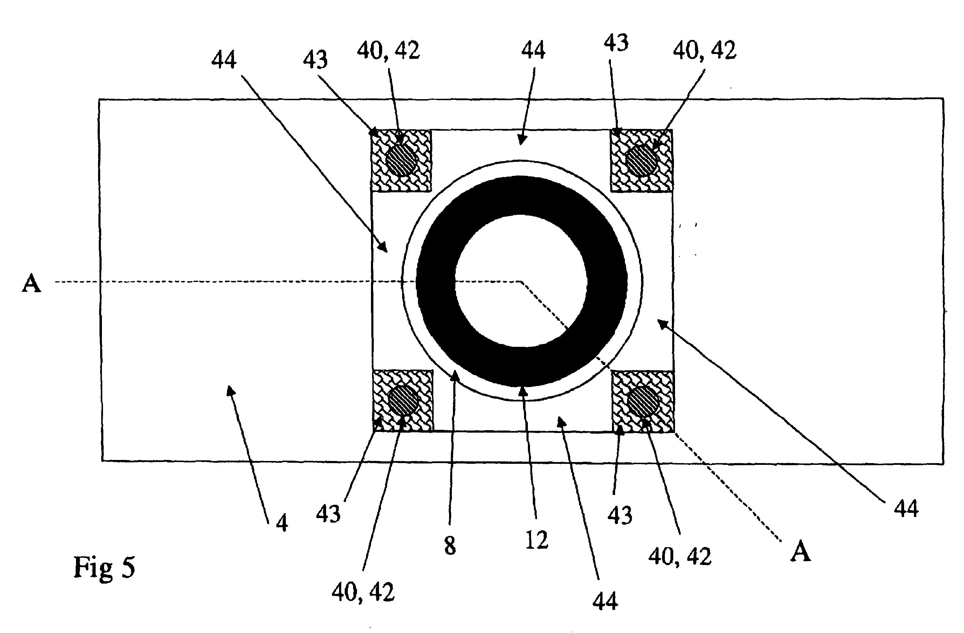

Fig. 5 zeigt eine Draufsicht auf die Platine 4 mit der Membran 2 gemäß Fig. 4. Dabei bezeichnet die Linie A-A in Fig. 5 die Schnittlinie, entlang derer der Schnitt gemäß Fig. 4 verläuft. In der schematischen Darstellung gemäß Fig. 5 sind auch die in der Ansicht eigentlich unterhalb der Membran 2 gelegenen Elemente dargestellt. So ist in dem Durchgangsloch 8 in der Platine 4 der Dichtungsring 12 in Form eines O-Ringes angeordnet. Umfänglich zu dem Durchgangsloch 8 befinden sich an vier gleichmäßig voneinander beabstandeten Punkten die Kontaktstellen 42, welche mit entsprechenden, gegenüberliegenden Kontaktstellen 40 an der Membran 2 in Kontakt sind. Die Verbindung der Kontaktstellen 40 und 42 miteinander erfolgt beispielsweise in bekannter Weise durch Verlöten oder Bonden. Alternativ ist es auch möglich, die Membran 2 mit der Platine 4 mittels eines Klebstoffes 43 zu verbinden. Dabei wird der Klebstoff 43 vorzugsweise so gewählt, dass er beim Aushärten schrumpft. Wenn ein solcher Klebstoff 43 im Bereich der Kontaktstellen 40, 42 verwendet wird, bewirkt die Schrumpfung des Klebstoffes 43 beim Aushärten, dass die Kontaktstellen 40 und 42 aufeinander zugezogen werden und kontaktierend miteinander zur Anlage kommen. Gleichzeitig bildet der umgebende Klebstoff 43 eine Schutzschicht. Die Kontaktstellen 40 und 42 weisen normal zu der Oberfläche der Platine eine derartige Bauhöhe auf, dass die Membran 2 beabstandet zu der Platine 4 angeordnet ist. Dadurch entstehen zwischen den Kontaktstellen gelegene Spalte 44, welche der Entlüftung des Durchgangsloches 8 dienen. Die Spalte erstrecken sich von dem rückwärtigen Raum des Dichtungselementes 12 in dem Durchgangsloch 8 zum Außenumfang der Membran 2. Dies hat den Vorteil, dass ein Fluid, insbesondere Feuchtigkeit, welche durch das Dichtungselement 12 hindurchtritt, aus dem rückwärtigen Raum zwischen Dichtungselement 12 und der Innenwandung des Durchgangsloches 8 nach außen entweichen kann. Zu diesem Zweck kann das Halteelement 4, 6 mit einem Anschlusskanal versehen sein.

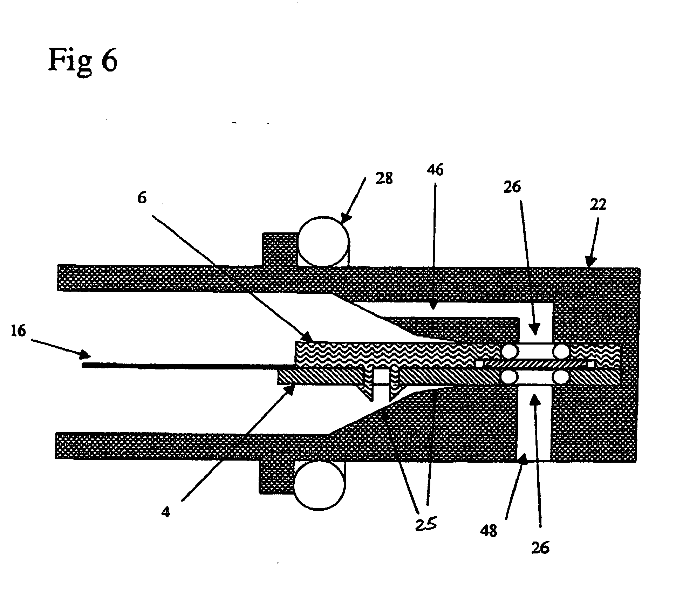

Die Figuren 6 bis 9 zeigen verschiedene Ausführungsformen des Gehäuses 22, wobei die im Inneren des Gehäuses 22 angeordnete Baugruppe bestehend aus Platine 4, Halteelement 6, Membran 2 und Dichtungselementen 12 und 14 immer identisch ist und der anhand von Figuren 1 und 3 beschriebenen Anordnung entspricht. Das Gehäuse 22 gemäß Fig. 6 entspricht im Wesentlichen dem anhand von Fig. 2 und Fig. 3(D) erläuterten Aufbau des Gehäuses. In dem Gehäuse sind zwei Anschlusslöcher 26 ausgebildet, welche mit den Durchgangslöchern 8 und 10 in der Platine 4 bzw. dem Halteelement 6 zur Druckbeaufschlagung der Membran 2 in Verbindung stehen. Gemäß der Ausführungsform in Fig. 6 steht das eine Anschlussloch 26 in Verbindung mit einem Kanal 46, welcher sich in den rückwärtigen Raum des Gehäuses 22 erstreckt, in dem sich auch die Anschlussleitungen 16 für den Drucksensor befinden. Dieser Bereich ist der Bereich des Gehäuses 22, welcher einem zu messenden Fluid abgewandt ist. Der Kanal 46 steht somit mit der Umgebungsluft an der Außenseite des Sensors in Verbindung. Dies ermöglicht, einen Druck eines in den Kanal 48 eintretenden Fluids gegenüber dem Umgebungsdruck zu bestimmen. Der Kanal 48 steht in Verbindung mit der zweiten Anschlussöffnung 26, so dass die Membran 2 durch den Kanal 48 von einem Fluid mit Druck beaufschlagt wird.

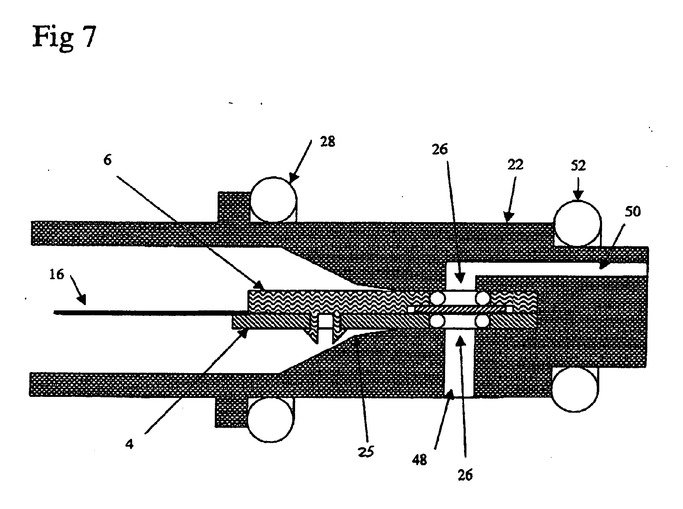

Fig. 7 zeigt eine weitere Ausführungsform des Gehäuses 22. Auch in diesem Gehäuse gibt es einen Kanal 48, durch welchen die Membran 2 mit einem Druck von einem Fluid beaufschlagt werden kann. Dieser Kanal 48 mündet an der Außenseite des Gehäuses 22. Das Gehäuse 22 gemäß Fig. 7 weist einen zweiten Dichtungsring 52 an seiner Außenseite auf. Der Kanal 48 mündet in dem Raum zwischen den beiden Dichtungsringen 28 und 52 und kann auf diese Weise mit einem ersten Fluidkanal in Verbindung stehen. Das zweite Anschlussloch 26, welches an der dem Kanal 48 entgegengesetzten Seite der Membran 2 gelegen ist, steht mit einem Kanal 50 in Verbindung. Dieser Kanal 50 öffnet sich ebenfalls zur Außenseite des Gehäuses 22 in einen Bereich, welcher durch den Dichtungsring 52 von dem Bereich, in den der Kanal 48 mündet, getrennt ist. Auf diese Weise ist es möglich, einen Differenzdruck zwischen den Kanälen 48 und 50 zu messen, wobei die Kanäle 48 und 50 jeweils mit einer Fluidleitung in Verbindung stehen können. Auf diese Weise kann ein Druckunterschied zwischen zwei Leitungen bestimmt werden.

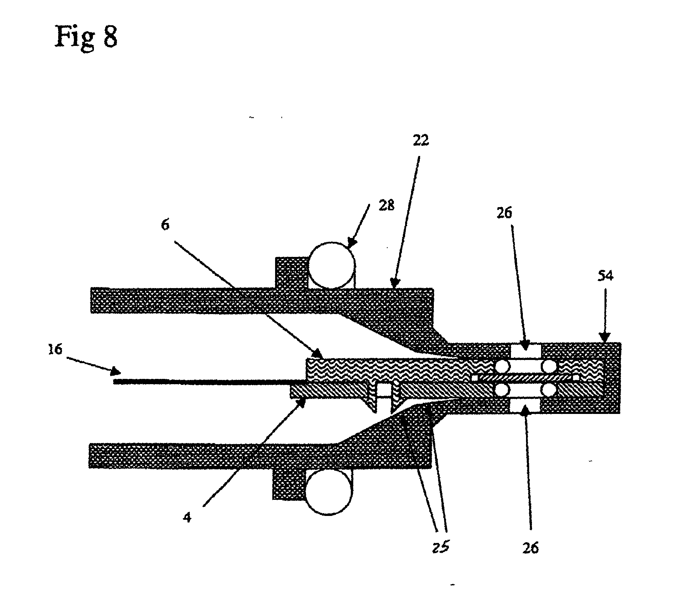

Fig. 8 zeigt eine dritte Ausführungsform des Gehäuses 22. Bei dieser Ausführungsform erstrecken sich die Anschlusslöcher 26, ausgehend von der Membran 2, in Verlängerung der Durchgangslöcher 8 und 10 in der Platine 4 und dem Halteelement 6 normal zur Außenseite des Gehäuses 22 nach außen. Der Bereich des Gehäuses 22, in dem die Membran angeordnet ist, ist als verjüngter Vorsprung 54 ausgebildet, an dessen zwei entgegengesetzten Seiten jeweils ein Anschlussloch 26 mündet. Das so ausgestaltete Gehäuse 22 kann in einen Fluidkanal eingesetzt werden, wobei es durch die Dichtung 28 nach außen abgedichtet wird. Dabei ragt der Vorsprung 54 in die Fluidströmung hinein und kann auf diese Weise Druckunterschiede innerhalb der Fluidströmung erfassen.

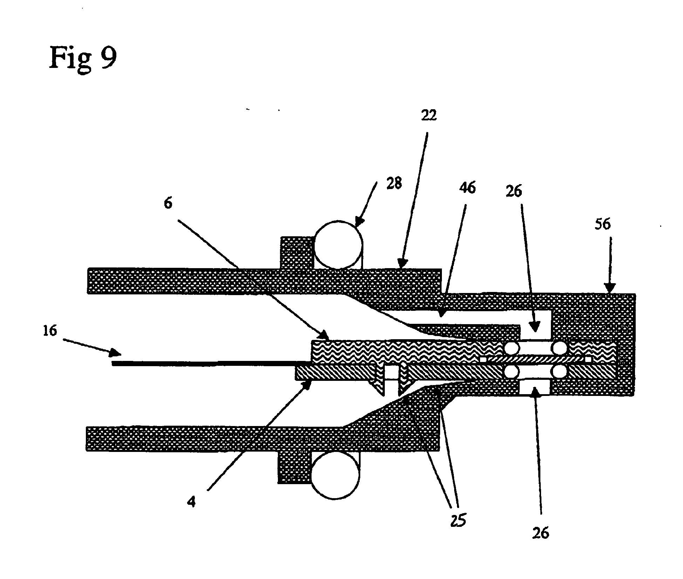

Fig. 9 zeigt eine vierte bevorzugte Ausführungsform des Gehäuses 22. Diese Ausführungsform entspricht im Wesentlichen der anhand von Fig. 6 beschriebenen Ausführungsform, jedoch ist der fluidberührte Abschnitt des Gehäuses, in welchem die Membran angeordnet ist, ähnlich schmal wie der Vorsprung 54 in Fig. 8 ausgebildet. Der so gebildete Vorsprung 56 kann ebenfalls dazu verwendet werden, in eine Strömung hineinzuragen, um dort einen Druck zu bestimmen. Dabei öffnet sich die eine Anschlussöffnung 26 zur Außenseite des Vorsprunges 56, d. h. in den Fluidstrom hinein, während die zweite Anschlussöffnung 26 über den Kanal 46 mit der Umgebung in Verbindung steht. Dies entspricht der Ausgestaltung gemäß Fig. 6. So kann hier ein Druck in einer Fluidströmung relativ zum Umgebungsdruck bestimmt werden.

### Bezugszeichenliste

- 2: - Membran
- 4: - Platine
- 6: - Halteelement
- 8: - Durchgangsloch
- 10: - Durchgangsloch
- 12, 14: - Dichtungselemente
- 16: - Anschlussleitungen
- 18 -: Ausnehmung
- 20: - Rastverbindung
- 22: - Gehäuse
- 24: - Öffnung
- 25: Fase
- 26: - Anschlusslöcher
- 28: - Dichtung
- 30: - elektronische Bauelemente
- 32: - Durchgangsloch
- 34: - Rastvorsprung
- 36: - Seitenkante
- 38: - Verjüngung
- 40, 42: - Kontaktstellen
- 43: Klebstoff
- 44: - Spalte
- 46: - Kanal
- 48: - Kanal
- 50: - Kanal
- 52: - Dichtung
- 54: - Vorsprung
- 56: - Vorsprung

## Patentansprüche

1. Drucksensor mit einer Membran (2) und mindestens einem auf der Membran (2) angeordneten Messelement zum Erfassen einer Membranauslenkung, **gekennzeichnet durch** zumindest ein an der Oberfläche der Membran (2) angeordnetes Halteelement (4), in welchem ein Dichtungselement (12) aufgenommen ist und welches mit einem der Membranoberfläche zugewandten Durchgangsloch (8) versehen ist, das einen Innenquerschnitt korrespondierend zur Außenkontur des Dichtungselementes (12) aufweist, und das Dichtungselement (12) an der Membran (2) positioniert und fixiert.

2. Drucksensor nach Anspruch 1, **dadurch gekennzeichnet, dass** an jeder der zwei einander entgegengesetzten Oberflächen der Membran (2) jeweils ein Halteelement (4, 6) angeordnet ist mit jeweils einem der Membranoberflöche zugewandten Durchgangsloch (8, 10), das einen Querschnitt korrespondierend zur Außenkontur eines aufzunehmenden Dichtungselementes (12, 14) aufweist.

3. Drucksensor nach Anspruch 1 oder 2, **dadurch gekennzeichnet, dass** die Halteelemente (4, 5) im Bereich des Durchgangslochs (8, 10) eine Stärke geringer als die Dicke eines einzusetzenden Dichtungselementes (12, 14) aufweisen..

4. Drucksensor nach einem der vorangehenden Ansprüche, **dadurch gekennzeichnet, dass** das Dichtungselement (12, 14) ein Dichtungsring und insbesondere ein O-Ring ist.

5. Drucksensor nach einem der vorangehenden Ansprüche, **dadurch gekennzeichnet, dass** das Dichtungselement (12, 14) fest mit dem Halteelement (4, 6) verbunden und insbesondere einstückig mit diesem ausgebildet ist.

6. Drucksensor nach einem der Ansprüche 2 bis 5, **dadurch gekennzeichnet, dass** die beiden Halteelemente (4, 6) über zumindest eine Rastverbindung (20) miteinander verbunden sind.

7. Drucksensor nach einem der Ansprüche 2 bis 6, **dadurch gekennzeichnet, dass** die beiden Halteelemente (4, 6) einstückig ausgebildet und über ein Scharnier miteinander verbunden sind.

8. Drucksensor nach einem der vorangehenden Ansprüche, **dadurch gekennzeichnet, dass** in zumindest einem Halteelement (6) an einer Oberfläche ein das Durchgangsloch (10) umgebender Absatz (18) zur Aufnahme der Membran (2) ausgebildet ist.

9. Drucksensor nach einem der vorangehenden Ansprüche, **dadurch gekennzeichnet, dass** zumindest ein Halteelement (4) von einer Platine gebildet wird.

10. Drucksensor nach Anspruch 9, **dadurch gekennzeichnet, dass** die Membran (2) mit auf der Platine (4) ausgebildeten Leiterbahnen über im Umfangsbereich des Durchgangsloches (8) angeordnete Kontaktstellen (40, 42) elektrisch verbunden ist.

11. Drucksensor nach Anspruch 10, **dadurch gekennzeichnet, dass** zwischen den Kontaktstellen (40, 42) zwischen Membran (2) und Platine (4) sich, vorzugsweise parallel zur Membranoberfläche, von dem Durchgangsloch (8) zum Außenumfang der Membran (2) erstreckende Spalte (44) ausgebildet sind.

12. Drucksensor nach einem der vorangehenden Ansprüche, **dadurch gekennzeichnet, dass** ein Sensorgehäuse (22) vorgesehen ist, in welches die Membran (2) mit dem Halteelement (4, 6) in einer Richtung parallel zur Membranoberfläche derart eingesetzt ist, dass ein in das Durchgangsloch (8, 10) des Halteelementes eingesetztes Dichtungselement (12, 14) zwischen einer Membranoberfläche und dem Sensorgehäuse (22) zur Anlage kommt.

13. Drucksensor nach Anspruch 12, **dadurch gekennzeichnet, dass** in dem Sensorgehäuse (22) zwei Anschlusslöcher (26) angeordnet sind, welche jeweils gegenüberliegend zu einem der Durchgangslöcher (8, 10) in den Halteelementen (4, 6) münden, wobei in die Durchgangslöcher (8, 10) eingesetzte Dichtungselemente (12, 14) am Umfang der Mündung der Anschlusslöcher (26) an dem Sensorgehäuse (22) zur Anlage kommen.

14. Drucksensor nach Anspruch 12 oder 13, **dadurch gekennzeichnet, dass** zumindest der fluidberührte Teil des Sensorgehäuses (22) einstückig ausgebildet ist.

## Claims

1. A pressure sensor comprising a membrane (2) and at least one measuring element disposed on said membrane (2) for detecting a membrane deflection, **characterised by** at least one retaining element (4) disposed on the surface of said membrane (2), in which a sealing element (12) is received and which is provided with a through-hole (8) facing said membrane surface, which through-hole (8) has an inner cross-section corresponding to the outer contour of said sealing element (12), and positions and fixes the sealing element (12) on the membrane (2).

2. The pressure sensor according to claim 1, **characterised in that** on each of the two surfaces of the membrane (2) opposite to one another respectively one retaining element (4, 6) is disposed with respectively one through-hole (8, 10) facing said membrane surface, which through-hole (8, 10) has a cross-section corresponding to the outer contour of a receiving sealing element (12, 14).

3. The pressure sensor according to claim 1 or 2, **characterised in that** in the area of the through-hole (8, 10), the retaining elements (4, 5) have a thickness less than the thickness of a sealing element (12, 14) to be inserted.

4. The pressure sensor according to one of the preceding claims, **characterised in that** the sealing element (12, 14) is a sealing ring and in particular an O-ring.

5. The pressure sensor according to one of the preceding claims, **characterised in that** the sealing element (12, 14) is firmly connected to the retaining element (4, 6) and in particular is formed in one piece with said retaining element (4,6).

6. The pressure sensor according to one of claims 2 to 5, **characterised in that** the two retaining elements (4, 6) are connected to one another by means of at least one latching connection (20).

7. The pressure sensor according to one of claims 2 to 6, **characterised in that** the two retaining elements (4, 6) are formed in one piece and are connected to one another by means of a hinge.

8. The pressure sensor according one of the preceding claims, **characterised in that** a recess (18) surrounding the through-hole (10) for receiving the membrane (2) is formed in at least one retaining element (6) on one surface.

9. The pressure sensor according one of the preceding claims, **characterised in that** at least one retaining element (4) is formed by a printed circuit board.

10. The pressure sensor according to claim 9, **characterised in that** the membrane (2) is electrically connected to conductor paths formed on the printed circuit board (4) via pads (40, 42) disposed in the peripheral region of the through-hole (8).

11. The pressure sensor according to claim 10, **characterised in that** gaps (44) are formed between the pads (40, 42) between membrane (2) and printed circuit board (4), preferably extending parallel to the membrane surface, from a through-hole (8) to the outer circumference of the membrane (2).

12. The pressure sensor according to one of the preceding claims, **characterised in that** a sensor housing (22) is provided, in which the membrane (2) with the retaining element (4, 6) is inserted in a direction parallel to the membrane surface in such a manner that a sealing element (12, 14) inserted in the through-hole (8, 10) of the retaining element comes to rest between a membrane surface and the sensor housing (22).

13. The pressure sensor according to claim 12, **characterised in that** two connecting holes (26) are disposed in the sensor housing (22), each opening opposite to one of the through-holes (8, 10) in the retaining elements (4, 6), wherein sealing elements (12, 14) inserted in the through holes (8, 10) come to rest against the opening of the connecting holes (26) on the sensor housing (22).

14. The pressure sensor according to claim 12 or 13, **characterised in that** at least one part of the sensor housing (22) in contact with fluid is configured in one piece.

## Revendications

1. Capteur de pression comportant une membrane (2) et au moins un élément de mesure disposé sur la membrane (2) pour détecter une déviation de la membrane, **caractérisé par** au moins un élément de retenue (4) disposé contre la surface de la membrane (2), dans lequel un élément d'étanchéité (12) est reçu et qui est pourvu d'un trou de passage (8) tourné vers la surface de la membrane, lequel trou de passage présente une section transversale intérieure correspondant au contour extérieur de l'élément d'étanchéité (12) et positionne et immobilise l'élément d'étanchéité (12) contre la membrane (2).

2. Capteur de pression selon la revendication 1, **caractérisé en ce qu'**est disposé sur chacune des deux surfaces, opposées l'une à l'autre, de la membrane (2), un élément de retenue (4, 6) respectif ayant chacun un trou de passage (8, 10) qui est tourné vers la surface de membrane et qui présente une section transversale correspondant au contour extérieur d'un élément d'étanchéité (12, 14) qu'il est appelé à recevoir.

3. Capteur de pression selon la revendication 1 ou 2, **caractérisé en ce que** les éléments de retenue (4, 5) présentent, dans la région du trou de passage (8, 10), une épaisseur inférieure à la grosseur d'un élément d'étanchéité (12, 14) appelé à y être inséré.

4. Capteur de pression selon l'une des revendications précédentes, **caractérisé en ce que** l'élément d'étanchéité (12, 14) est un joint d'étanchéité annulaire, en particulier un joint torique.

5. Capteur de pression selon l'une des revendications précédentes, **caractérisé en ce que** l'élément d'étanchéité (12, 14) est relié de façon inamovible à l'élément de retenue (4, 6) et, en particulier, est réalisé en une seule pièce avec celui-ci.

6. Capteur de pression selon l'une des revendications 2 à 5, **caractérisé en ce que** les deux éléments de retenue (4, 6) sont reliés l'un à l'autre par l'intermédiaire d'au moins une jonction par encliquetage (20).

7. Capteur de pression selon l'une des revendications 2 à 6, **caractérisé en ce que** les deux éléments de retenue (4, 6) sont réalisés en une pièce et sont reliés l'un à l'autre par l'intermédiaire d'une charnière.

8. Capteur de pression selon l'une des revendications précédentes, **caractérisé en ce que** dans au moins un élément de retenue (6) est réalisé, au niveau d'une surface, un épaulement (18) entourant le trou de passage (10) et destiné à recevoir la membrane (2).

9. Capteur de pression selon l'une des revendications précédentes, **caractérisé en ce qu'**au moins un élément de retenue (4) est formé par une platine.

10. Capteur de pression selon la revendication 9, **caractérisé en ce que** la membrane (2) est reliée électriquement à des pistes conductrices formées sur la platine (4), par l'intermédiaire de pièces de contact (40, 42) disposées dans la région du pourtour du trou de passage (8).

11. Capteur de pression selon la revendication 10, **caractérisé en ce qu'**entre les pièces de contact (40, 42) sont ménagés des interstices (44) s'étendant entre la membrane (2) et la platine (4), de préférence parallèlement à la surface de la membrane, du trou de passage (8) au pourtour extérieur de la membrane (2).

12. Capteur de pression selon l'une des revendications précédentes, **caractérisé en ce qu'**il est prévu un boîtier de capteur (22) dans lequel la membrane (2) est insérée avec l'élément de retenue (4, 6), dans une direction parallèle à la surface de la membrane, de telle manière qu'un élément d'étanchéité (12, 14) inséré dans le trou de passage (8, 10) de l'élément de retenue, vienne en appui entre une surface de la membrane et le boîtier de capteur (22).

13. Capteur de pression selon la revendication 12, **caractérisé en ce que** dans le boîtier de capteur (22) se trouvent deux trous de raccordement (26), qui débouchent dans les éléments de retenue (4, 6), chacun en vis-à-vis d'un trou de passage (8, 10) respectif, des éléments d'étanchéité (12, 14) insérés dans les trous de passage (8, 10) venant alors en appui, sur le pourtour de l'embouchure des trous de raccordement (26), contre le boîtier de capteur (22).

14. Capteur de pression selon la revendication 12 ou 13, **caractérisé en ce qu'**au moins la partie, au contact du fluide, du boîtier de capteur (22) est réalisée en une seule pièce.
